# EUROPEAN PATENT APPLICATION

(11) **EP 1 418 574 A2**
(43) Date of publication of application: **12.05.2004**
(21) Application number: 03256957.6
(22) Date of filing: 04.11.2003
(51) Int. Cl.: G11B 7/006, G11B 7/0045

(54) **Information recording apparatus and information recording method**

(30) Priority: 06.11.2002 JP 2002322926; 10.12.2002 JP 2002357790
(71) Applicant: Ricoh Company, Ltd., Tokyo 143-8555 (JP)
(72) Inventor: Sawada, Yasuo, Machida-shi, Tokyo (JP); Kato, Masaki, Sagamihara-shi, Kanagawa (JP); Yamada, Katsuyuki, Zama-shi, Kanagawa (JP); Narumi, Shinya, Yokohama-shi, Kanagawa (JP)
(74) Representative: Lamb, Martin John Carstairs

(57) **Abstract**

An information recording apparatus performs an excellent recording, erasing and rewriting operation with respect to a recording medium, which can be recorded at a recording speed equal to or higher than 4X recording speed without large change in a recording strategy. The information recording apparatus records information on a recording medium by irradiating a pulsed light onto the recording medium. A controller controls an optical head to irradiate the pulsed light so that a length of a recording mark formed on the recording medium is an n times of a period Tw of a basic clock, where n is a natural number. The controller adds an off-pulse to an end of a final pulse of a train of multi-pulses contained in the pulsed light so that a light having a bias power Pb is irradiated during a period T1 of the off-pulse. The controller is capable of setting the period T1 of the off-pulse to a predetermined value so that a relationship 0≦T1<0.2Tw is satisfied.

## Description

### BACKGROUND OF THE INVENTION

### 1. Field of the Invention

The present invention generally relates to information recording technique and, more particularly, to an information recording apparatus and method which records information on a phase change type rewritable optical disk by using a multi-pulse recording beam.

### 2. Description of the Related Art

In recent years, a demand for a high-speed recording of an optical information recording medium has been increasing. Especially, in the case of a disc-like optical information recording medium, an increase in a rotational speed of the disc-like information recording medium has been progressed since a recording/reproducing speed can be increased by increasing the rotational speed. From among optical discs, an optical information recording medium, on which information can be recorded merely by modulating an intensity of light to be irradiated onto the medium, can be used with a simple recording mechanism, thereby allowing a reduction in costs of a medium and a recording apparatus. Additionally, since an intensity modulated light is used also for reproduction, a high compatibility with a reproduction exclusive apparatus can be acquired. Thus, the optical information recording medium, on which information can be recorded merely by modulating a light irradiated onto the medium when recording, has become popular, and there is a demand for further high-density and high-speed recording due to recent sharp increase in an amount of electronic information.

From among such optical discs, an optical disc using a phase change material can be subjected to a rewriting operation many times. Thus, an optical disc using a phase change material has become a mainstream. In the case of the optical disc using the phase change material, a recording can be achieved by making a rapid-cooling state and a slow-cooling state in a recording layer material by intensity modulation of a light beam to be irradiated onto the optical disc. The recording layer material becomes an amorphous in the rapid-cooling state, and becomes a crystal in the slow-cooling state. Optical properties differ from an amorphous to a crystal, which enables recording of optical information.

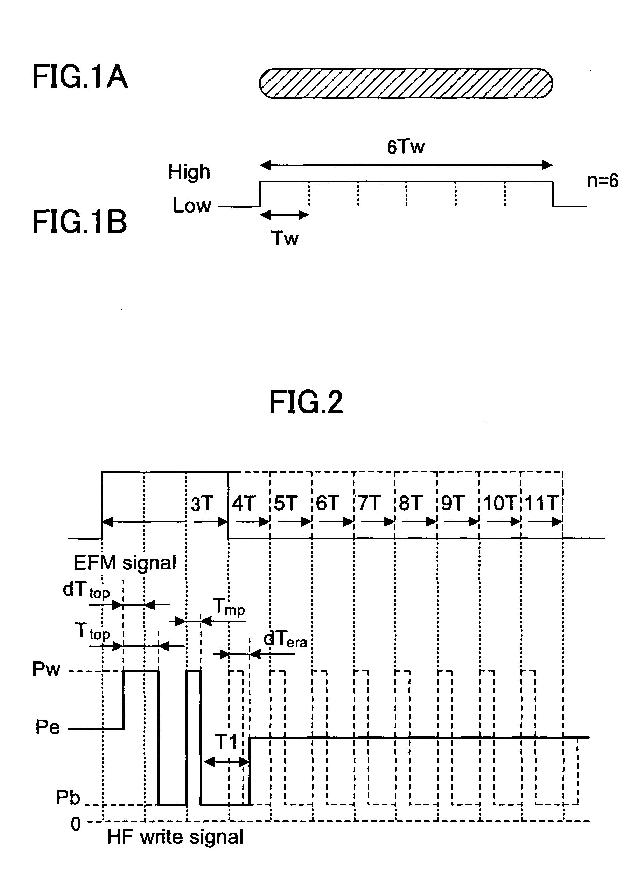

Since the principle of recording is based on the complicated mechanism of "rapid-cooling" and "slow-cooling" of the recording layer material, a high-speed recording may be performed using a pulsed recording light, which is intensity modulated with three values, onto a medium as disclosed in Japanese Laid-Open Patent Application No. 9-219021. Japanese Laid-Open Patent Applications No. 9-138947 and No. 2000-322740 also suggest such a recording method. In the above-mentioned recording method, a mark such as shown in FIG. 1A is recorded on a medium by a high-intensity light and parts other than the mark are formed by a low-intensity light, as shown in FIG. 1B. The time length of the high-intensity light, which corresponds to a length of the mark, is equal to an integral multiple of a period Tw of a reference clock signal. That is, the mark recorded is represented by a time length n·Tw, where n is a natural number. The range of the natural number n depends on modulation methods, and 3 through 11 are used for a compact disc (CD) system and 3 through 11 and 14 are used for a digital versatile disc (DVD) system. FIGS. 1A and 1B illustrate a case where the natural number n is 6.

FIG. 2 shows a multi-pulse recording method, which is applicable to a DVD+RW.

The parameters of time arrangement (recording strategy) of the optimal recording multi-pulse for a recording medium is previously recorded on ADIP (Address In Pre-groove) of the recording medium in the form of a wobble signal which is generated by phase-modulation the groove. A recording apparatus reads the parameter so as to set a recording strategy, and performs a multi-pulse recording operation. Information regarding parameters of a recording strategy is referred to as physical disc information. 256 bytes are assigned to ADIP, and various items of information are recorded by each 1 byte (8 bits). The number of multi-pulses is n-1 while the length of the recording mark is n·Tw. The rising edge of each pulse other than a head pulse synchronizes with a base clock, and a period thereof is 1Tw. The rising edge of a head pulse is at a position which leads a position of 1T after the rising edge of a logical data pulse by a time interval represented by a parameter dTtop. The width of the head pulse is Ttop and the width of each pulse after the second pulse is Tmp. A light having a bias power Pb is irradiated between the adjacent pulses. If a recording power during each pulse is set to Pw, the recording power is greater than the bias power Pb (Pw>Pb). The off-pulse having the bias power Pb is added after the irradiation of the final pulse. Following the off-pulse, the recording of an erase power Pp (Pw>Pe>Pb) is irradiated until a rising time of a multi-pulse, which records a next mark. The width (time period) of the off-pulse is equivalent to a time period from a falling edge of the final pulse to a rising to the erase power Pe, which is apart from a falling edge of the logical data pulse by a parameter dTera.

The bias power Pb is set during the interval between multi-pulses and during the off-pulse so as to rapidly cool the recording layer (phase change material), which has been melted by being irradiated by a light of the recording power Pw, to form an amorphous part which corresponds to a recording mark. Moreover, the recording layer irradiated by the light of the erase power Pe turns into a crystal state, thereby forming areas (spaces) between marks. The irradiation by the bias power Pb between the multi pulses is necessary for maintaining uniformity of recording marks. Additionally, the irradiation by the bias power Pb during the off-pulse provides a great influence to a change of the entire recording mark into an amorphous.

Recording at 1X to 2.4X recording speed is applicable to the present DVD+RW, and an optimum time period of the off-pulse irradiation is determined in accordance with the respective recording speed.

In the meantime, there is a demand for high-speed recording at a speed higher than 2.4X, and excellent recording, erasure and rewriting characteristics are required also in such a high speed recording operation. However, if recording is performed on the current recording medium, which can be recorded at a speed of 1X to 2.4X, according to the recording strategy which provides the off-pulse in the conventional manner and the recording is at a speed more than the 4X recording speed, a rapid -cooling of the phase change material after being melted by irradiation of the pulse light tends to easily occur. For this reason, a part corresponding to a mark is tuned into amorphous excessively, which causes a problem in that the recording characteristics, especially erasing and rewriting characteristics, are deteriorated.

By improving the recording material of the medium so as to increase a recrystallization upper-limit linear velocity by suppressing tendency of turning into an amorphous state at a high-speed recording, erasing and rewriting characteristics can be obtained even by the conventional recording strategy which adds the off-pulse at the end of the final pulse. However, in such a case, the recording strategy used for the current recording medium, which can be recorded at a recording speed of 1X to 2.4X, cannot be used, and, thus, the improved recording medium cannot be recorded with good characteristics by a current drive unit. That is, the improved recording medium becomes merely a high-speed recording medium having no backward compatibility. Therefore, in order to enable recording at a recording speed of 1X to 2.4X also with such a recording medium, it is necessary to change a recording strategy of a drive unit so as to facilitate a change into an amorphous state. In order to do this, it is required to make the rapid-cooling after melting the phase change material by increasing the recording power Pw of the multi pulse and decreasing a width of the pulses. However, in this case, there are restrictions in the hardware that the.required laser power may exceed the maximum laser output power of the pickup provided in the drive unit. Therefore, it is not capable of changing a recording strategy according to a version-up of a drive firm ware by downloading using the Internet.

### SUMMARY OF THE INVENTION

It is a general object of the present invention to provide an information recording apparatus and method in which the above-mentioned problems are eliminated.

A more specific object of the present invention is to provide an information recording apparatus and method which enables a DVD+RW drive unit to perform an excellent recording, erasing and rewriting operation with respect to a recording medium, which can be recorded at a recording speed higher than a speed of 4X, without large change in a recording strategy.

In order to achieve the above-mentioned objects, there is provided according to one aspect of the present invention an information recording apparatus for recording information on a recording medium by irradiating a pulsed light onto the recording medium, comprising: a rotating mechanism that rotates the recording medium at one of predetermined recording speeds; an optical head irradiating the pulsed light onto the recording medium; and a controller that controls the optical head so as to irradiate the pulsed light so that a length of a recording mark formed on the recording medium by irradiation of the pulsed light is an n times of a period Tw of a basic clock, where n is a natural number, the controller also controls the pulsed light in accordance with one of predetermined recording strategies which matches the one of the predetermined recording speeds so that the pulsed light contains a train of multi-pulses of a light having a recording power Pw and a light having a bias power Pb is irradiated during intervals between the adjacent multi-pulses and a light having an erasing power Pe is irradiated during intervals between adjacent trains of the multi-pulses, where a relationship Pw>Pe>Pb is satisfied, wherein the controller adds an off-pulse to an end of a final pulse of the train of multi-pulses so that the light having the bias power Pb is irradiated during a period T1 of the off-pulse; and the controller is capable of setting the period T1 of the off-pulse to a predetermined value so that a relationship 0≦ T1<0.2Tw is satisfied.

In the information recording apparatus according to the present invention, the controller may set the predetermined value of the period T1 of the off-pulse when recording is performed in accordance with one of the predetermined recording strategies, which is used for the recording speed equal to or higher than 11 m/s.

Additionally, in the information recording apparatus according to the present invention, the recording medium may include a recording layer formed of a material changeable into either an amorphous state and a crystal state, and the controller may use one of the predetermined recording strategies according to which the predetermined value of the period T1 of the off-pulse is set when a recrystallization upper limit linear velocity of the recording medium is 9 m/s to 13 m/s.

Further, in the information recording apparatus according to the present invention, the controller may use one of the predetermined recording strategies according to which, when a rising of a head pulse of the train of the multi-pulses leads a time when one period Tw has passed after a rising of a logical data pulse by a time interval dTtop, a relationship - 3Tw<dTtop<0 is satisfied.

Additionally, in the information recording apparatus according to the present invention, the controller may use one of the predetermined recording strategies according to which the period T1 of the off-pulse is set as T1=0.

Further, in the information recording apparatus according to the present invention, the recording medium may be a DVD+RW, and the predetermined recording strategies may include a strategy for a recording speed of 3.5 m/s, a strategy for a recording speed of 8.4 m/s and a strategy for a recording speed of 14 m/s, and wherein the predetermined value of the period T1 is set when the strategy for the recording speed of 14 m/s is used to generate the pulsed light when recording.

There is provided according to another aspect of the present invention an information recording method for recording information on a recording medium by irradiating a pulsed light onto the recording medium so that a length of a recording mark formed on the recording medium by irradiation of the pulsed light is an n times of a period Tw of a basic clock, where n is a natural number, the recording medium including a recording layer formed of a material changeable into either an amorphous state and a crystal state, the recording medium having a recrystallization upper limit linear velocity of 9 m/s to 13 m/s, the method comprising the steps of: irradiating the pulsed light containing a train of multi-pulses of a light having a recording power Pw and a light having a bias power Pb during intervals between the adjacent multi-pulses and a light having an erasing power Pe during intervals between adjacent trains of the multi-pulses, where a relationship Pw>Pe>Pb is satisfied; and adding an off-pulse to an end of a final pulse of the train of the multi-pulses so that the light having the bias power Pb is irradiated during a period T1 of the off-pulse, the period T1 of the off-pulse being set to a predetermined value so that a relationship 0≦T1<0.2Tw is satisfied.

Additionally, in the information recording method according to the present invention, the predetermined value may be set to the period T1 of the off-pulse when recording is performed at recording speed equal to or higher than 11 m/s. Further, when a rising of a head pulse of the train of the multi-pulses leads a time when one period Tw has passed after a rising of a logical data pulse by a time interval dTtop, a relationship -3Tw<dTtop<0 may be satisfied. The period T1 of the off-pulse may be set as T1=0.

According to the present invention, since the irradiation period of the off-pulse at a high recording speed (for example, 4X-recording speed) is set shorter than that of the conventional recording method, the mark formed on the recording medium by the irradiation of the pulsed light can be prevented from being excessively changed into an amorphous state, thereby achieving excellent recording, erasing and rewriting characteristics.

Moreover, since the recrystallization upper limit linear velocity of the recording medium is set to 9 m/s to 13 m/s, excellent recording, erasing and rewriting characteristics can be also achieved even when an information recording apparatus having recording strategies used for the conventional recording speeds such as 1X to 2.4X recording speed.

Additionally, since the position of the rising edge of the head pulse is closer to the rising edge of the logical data pulse than that of the conventional recording strategy used for 1X to 2.4X recording speed, a mark having an appropriate length can be formed at a high recording speed such as 4X recording speed, thereby achieving excellent recording, erasing and rewriting characteristics.

Other objects, features and advantages of the present invention will become more apparent from the following detailed description when read in conjunction with the accompanying drawings.

### BRIEF DESCRIPTION OF THE DRAWINGS

FIG. 1A is an illustration of a mark formed on a recording medium;
FIG. 1B is an illustration of a pulsed light, which forms the mark shown in FIG. 1A;
FIG. 2 shows a multi-pulse recording method, which is applicable to a DVD+RW;
FIG. 3 is a cross-sectional view of an optical information recording medium that is usable with an information recording apparatus performing an information recording method according to the present invention;
FIG. 4 is a block diagram of an optical information recording apparatus performing an information recording method using a recording strategy according to the present invention;
FIG. 5 is a graph showing a relationship between a recording linear velocity and a value of T1/Tw;
FIG. 6A is a 4-bit binary data conversion table of a parameter dTtop;
FIG. 6B is a 4-bit binary data conversion table of a parameter Ttop;
FIG. 7A is a 4-bit binary data conversion table of a parameter Tmp; and
FIG. 7B is a 4-bit binary data conversion table of a parameter dTera.

### DETAILED DESCRIPTION OF THE PREFERRED EMBODIMENTS

A description will now be given in detail, with reference to the drawings, of the present invention.

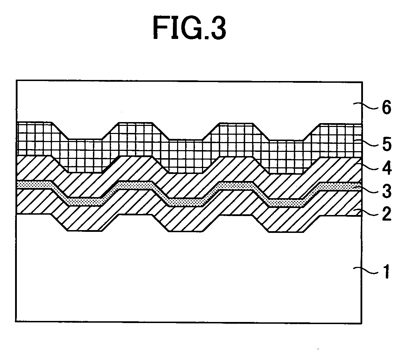

FIG. 3 is a cross-sectional view of an optical information recording medium that is usable with an information recording apparatus performing an information recording method according to the present invention. The recording medium shown in FIG. 3, which is an optical information recording disc, comprises a substrate 1, which is substantially transparent in a recording and reproducing wavelength range. At least a recording layer 3 and a reflection layer 5 are formed on the substrate 1.

The material of the transparent substrate 1 is preferably selected from materials such as glass or resin, which is transparent in the recording and reproducing wavelength range while maintaining a mechanical strength of the disc. It is general and preferable to use polycarbonate resin in the viewpoint of strength and transparency. A guide groove is formed on the substrate 1 so as to facilitate scanning of a light beam.

A phase change material is used as a material forming the recording layer 3. The phase change material is required to be a material, which can be set in more than two phases. Generally, a material of which phase can be changed between a crystal and an amorphous is used for the recording layer 3. Recording of information is performed by forming an amorphous part (mark) in the recording layer set in a crystal state, or forming a crystal part (mark) in the recording layer set in an amorphous state.

An arbitrary metal or alloy can be used to form the reflection layer 5, such as, for example, Au, Ag, Cu, Al or an alloy of the aforementioned.

Protective layers are provided on the upper and lower sides of the recording layer 3. The lower protective layer 2 is provided for protecting the resin substrate 1 from heat applied to the recording layer 3. The upper protective layer 4 is provided for preventing a heat diffusion from the recording layer 3 to the reflection layer and for causing a heat energy to be efficiently applied to the recording layer 3. The lower protective layer 2 is formed between the substrate 1 and the recording layer 3. The lower protective layer can be a multi-layer film which comprises a plurality of layers stacked one on another in the viewpoint of thermal-optical characteristics or chemical characteristics. The upper protective layer 4 is formed between the recording layer 3 and the reflection layer 5. Similar to the lower protective layer 2, the upper protective layer 4 can be a multi-layer film, which comprises a plurality of layers stacked one on another in the viewpoint of thermal-optical characteristics or chemical characteristics. The material of the protective layers can be a semiconductor material, a semimetal or a mixture of those materials.

A resin layer (overcoat layer) 6, which protects the above-mentioned each layer from a mechanical or chemical damage, is provided on the reflection layer 5, or a resin board may be applied to the reflection layer 5.

Recording and reproduction of information on the optical information recording medium is performed by scanning a light beam focused at positions near the recording layer 3. Informational recording is performed by irradiating an intensity-modulated light so as to form amorphous marks on the recording medium set in the crystal state. The optical information recording method according to the present invention uses a pulse width modulation (PWM) that is a method of recording information by changing a length of a mark and a length of the space between adjacent marks according to a period Tw of a basic clock as a minimum unit. As examples of PWM, there are EFM (Eight to Fourteen Modulation: 8-14 modulation) adopted in a compact disc, EFM+ (a kind of 8-16 modulation) adopted in a digital versatile disc (DVD) and a 1-7 modulation adopted in a blue ray disc.

According to these PWM modulation methods, since information is encoded by the lengths of the mark and space, it is important that the mark length and the space length are arranged uniformly. That is, the mark length and the space length should be n times the period Tw of the basic clock (n is a natural number), which is a length represented by n·Tw. In a case of a speed 1X of DVD, the period Tw is equal to 38.1 ns (Tw=38.1 ns), and n is a natural number of 3-11, 14. The formation of the mark having the length of n·Tw is performed by irradiating an intensity-modulated light onto the recording layer. There are three levels of intensity of the irradiated light, a recording power Pw, an erasing power Pe and a bias power Pb that satisfy a relationship Pw>Pe>Pb. When recording a mark, a pulsed light with the recording power (peak power) Pw and the bias power (bottom power) Pb is irradiated. On the other hand, when recording a space or erasing a mark, a continuous wave (CW: a constant intensity without intensity modulation) light of the erasing power Pe is irradiated. That is, an amorphous mark is formed by heating and then rapidly-cooling the recording layer material by irradiating a pulsed light, and a space of a crystal state is formed by irradiating a light at a lower power so as to heat and gradually cool the recording layer.

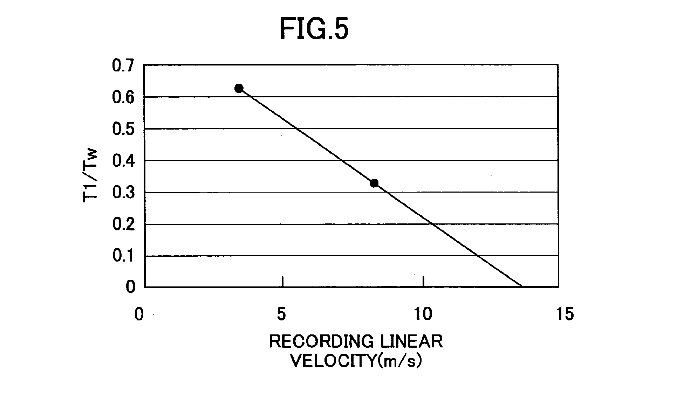

In the case of the conventional recording linear velocity of 3.5 m/sec (1X) and 8.4 m/sec (2.4X), the period of off-pulse is about 0.6Tw to 0.7Tw at the velocity of 1X and is about 0.3Tw to 0.4Tw at the velocity of 2.4X. That is, the off-pulse period (width) at the recording linear velocity of 2.4X is shorter than the off-pulse period at the recording linear velocity of 2.4X. This is for the reason that an effect of rapid-cooling is higher when the recording linear velocity of a disc is larger and the recording layer tends to be turned into amorphous easily. If a 4X recording is performed on the above-mentioned medium, the effect of rapid-cooling is further increased, which causes the recording layer to turn into amorphous more easily. Thus, in order to acquire excellent recording, erasing and rewriting characteristics by suppressing the change into amorphous, it is necessary to set the off-pulse period T1 in a range of 0≦T1<0.2Tw, and preferably be equal to zero (T1=0). The recording linear velocity corresponding to the range of 0≦T1<0.2Tw is higher than 11 m/s as interpreted from FIG. 5, which shows a relationship between the above-mentioned recording linear velocity and T1/Tw. T1 is just equal to zero (T1=0) when the recording linear velocity is equal to 14 m/s (4X). Additionally, when the recording linear velocity increases, the recording layer tends to turn into amorphous further. For this reason, a total width of the multi pulse with respect to a width of a logical data pulse, that is, a period from the rising edge of the head pulse to the falling edge of the final pulse at a recording linear velocity of higher than 2.4X is larger than an optimum value if the period is determined in accordance with the manner applied to the case where the recording linear velocity is 1X to 2.4X. Therefore, if the recording linear velocity increases, it is necessary to change the period to be shorter than that of the case where the recording linear velocity is 1X to 2.4X. Thus, if a heat pulse rises a time period dTtop after a position corresponding to 1T after the rising of the logical data pulse, it is preferable that a relationship -0.3Tw<dTtop<0 is satisfied, and more preferably a relationship -0.25Tw<dTtop<-0.1Tw is satisfied.

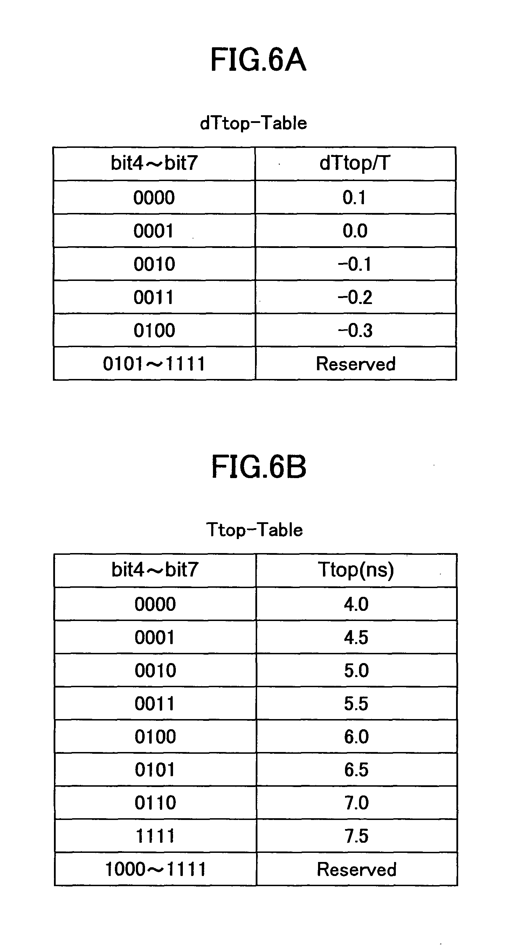

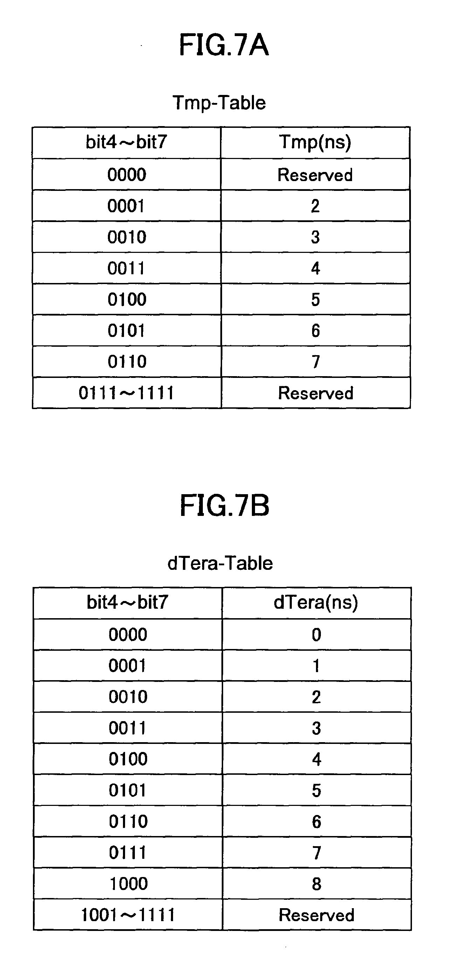

Although it is possible to acquire excellent recording, erasing and rewriting characteristics by the conventional medium recordable at 1X-2.4X by the above-mentioned setting of the off-pulse period T1 and dTtop, the conventional recording medium is insufficient when considering an overwrite for many times. Then, it is possible to acquire excellent recording, erasing and rewriting characteristics by setting a recrystallization upper limit linear velocity of the recording layer higher than that of the conventional recording medium by 1 m/s to 2 m/s, preferably setting the recrystallization upper limit linear velocity at 10 m/s to 12 m/s. It should be noted that the recrystallization upper limit linear velocity is defined in Japanese Laid-Open Patent Application No. 11-115313. In the example explained in the present application, the recrystallization upper limit linear velocity was measured by irradiating a light having a wavelength of 655 nm by DC of 11 mW. Each parameter for the above-mentioned 4X speed recording are provided in the physical disc information of the ADIP of a recording medium in addition to the parameters for the conventional 1X to 2.4 X recording speed at a stage of producing a substrate by using a stamper. At the time of recording, the real numerical value of each parameter is recorded after being converted into binary data by using a conversion table. The conversion table is stored in a ROM of a system controller provided in the information recording apparatus so as to convert reproduced binary data of each parameter provided in the physical disc information of the recording medium into the real numerical value by using the conversion table. Then, the information recording apparatus produces a recording strategy by using the parameters converted into the real numerical values. According to the DVD+RW standards for 1X to 2.4X recording speed, the conversion table is set using binary data of 1 byte (8 bits) that is prepared for each parameter of the recording strategy. A conversion table of 1 byte can be set in the same manner as that of a 4X recording speed as shown in FIG. 6A and 6B and FIGS. 7A and 7B. In the examples of FIGS. 6A and 6B and FIGS. 7A and 7B, higher order 4 bits in 1 byte are used.

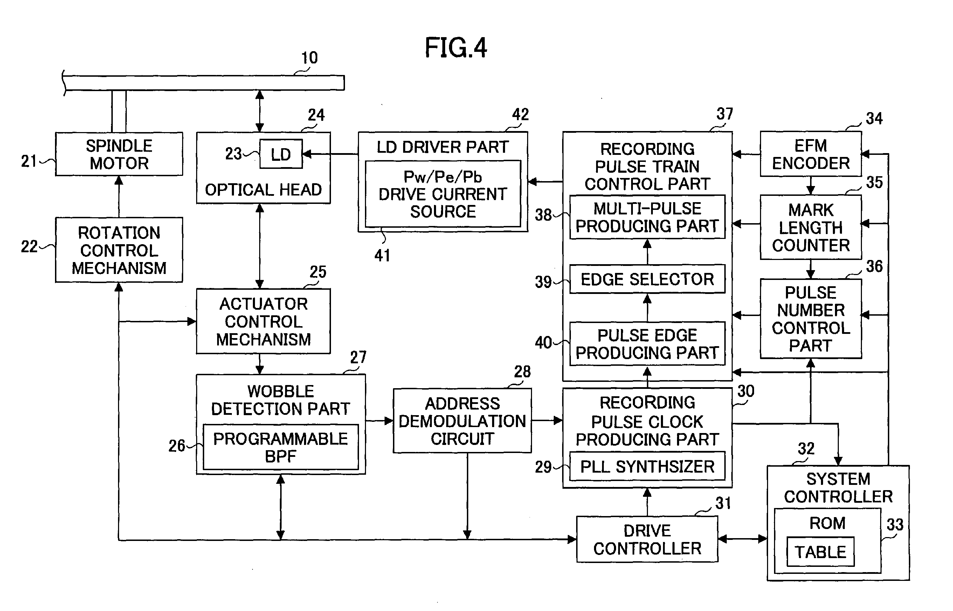

A description will now be given, with reference to FIG. 4, of the structure of the information recording apparatus that performs the information recording method with the above-mentioned recording strategy.

The information recording apparatus shown in FIG. 4 is provided with a rotation control mechanism 22 including a spindle motor 21 that rotates the optical information recording disc (medium) 10 such as a DVD-RW. Additionally, the information recording apparatus is provided with an optical head 24 that is movable in a radial direction of the optical information recording disc. The optical head 24 comprises an objective lens that irradiates a laser beam onto the optical information recording disc 10. An actuator control mechanism 25 is connected to an objective-lens drive unit and an output system of the optical head 24. A wobble detection part 27 including a programmable BPF 26 is connected to the actuator control mechanism 25. An address demodulation circuit 28 is connected to the wobble detection part 27 so as to demodulate the address from the detected wobble signal. A record clock generation part 30 including a PLL synthesizer circuit 29 is connected to the address demodulation circuit 28. A drive controller 31 as speed controlling means is connected to the PLL synthesizer circuit 29.

The rotation control mechanism 22, the actuator control mechanism 25, the wobble detection part 27 and the address demodulation circuit 28 are also connected to the drive controller 31 that is connected to a system controller 32. Additionally, the system controller 32 is of a so-called microcomputer structure type which has a CPU, etc., and is provided with a ROM 33 containing the conversion table of each recording parameter as shown in FIGS. 7A and 7B. Moreover, an EFM encoder 34, a mark length counter 35 and a pulse number control part 36 are connected to the system controller 32. A recording pulse train control part 37 as light emitting wavelength control means is connected to the EFM encoder 34, the mark length counter 35, the pulse number control part 36 and the system controller 32. The recording pulse train control part 37 includes a multi-pulse producing part 38, which produces the multi-pulse (on-pulse, off-pulse) defined by a recording strategy, an edge selector 39 and a pulse edge producing part 40.

An LD driver part 42 as light-source drive means is connected to an output side of the recording pulse train control part 37. The LD driver part 42 drives the semiconductor laser LD 23 of the optical head 24 by switching a drive current source 41 of each of the recording power Pw, erasing power Pe and bias power Pb.

In such a structure, in order to record information on the optical information recording medium 10, the rotational speed of the spindle motor 21 is controlled by the rotation control mechanism 22 under the control of the drive controller 31 so as to achieve a recording linear velocity corresponding to the target recording speed. Thereafter, an address demodulation is performed based on the wobble signal detected and separated, by the programmable BPF 26, from a push-pull signal obtained by the optical head 24, and a recording channel clock is generated by the PLL synthesizer circuit 29. Next, in order to generate the recording pulse train by the semiconductor laser LD 23, the recording channel clock and EFM data, which is recording information, are supplied to the recording pulse train control part 37. The multi pulse producing part 38 in the recording pulse train control part 37 generates the multi pulse in accordance with the recording strategy such as shown in FIG. 2. The LD driver part 42 switches the drive current source 41, which is set up so as to provide the above-mentioned irradiation power Pw, Pe or Pb, thereby, acquiring an LD light-emitting waveform according to the recording pulse train.

In the above-mentioned embodiment, the multi-stage pulse edge producing part 40, which has a resolution of 1/20 of the period of the recording channel clock, is provided in the recording pulse train control part 37. A rising control signal of a first pulse is generated by an edge pulse, which is supplied to the edge selector (multiplexer) 39 and then selected by the system controller 32 based on the parameter dTtop. The multi-stage delay circuit for the pulse edge producing part 40 can be constituted by a high-resolution gate delay element or a ring oscillator and a PLL circuit. Using the thus-generated rising control signal of the first pulse, the multi-pulse train synchronized with the period Tw of the basic clock is generated based on the parameters dTtop, Ttop and Tmp. Similarly, with respect to the irradiation period T1 of the off-pulse, a rising control signal of the off-pulse is generated by an edge pulse selected by the system controller 32 based on the parameter dTera.

A description will be given below of examples of the present invention and comparative examples. However, the present invention is not limited to the examples mentioned below.

### Example 1

On a polycarbonate substrate for DVD+RW, a ZnSSiO₂ film as a lower protective layer; a ZrO₂ film as a barrier layer for preventing mutual diffusion of atoms of the lower protective layer and a recording layer on the lower protective layer; a Ag₁In₂Sb₇₃Te₂₀Ge₄ film as the recording layer; a ZnSSiO₂ film as the recording layer and an upper protective layer; a SiC film as a sulfuration prevention layer, which prevents sulfuration of a reflective layer; and a Ag film as the reflective layer were sequentially formed using a sputtering method. The thickness of the films were 600/30/110/140/40/1400 A, respectively.

Furthermore, a protective layer made of resin was formed by a spin coating method, and the protective layer was cured by irradiating an ultraviolet light. An ultraviolet-light curable resin which is a commercially-available protective layer material for CD/DVD was used for the material of the protective layer. The thickness of the film of the protection layer was about 10 µm.

Furthermore, a cover board made of polycarbonate was stuck with an ultraviolet-light curable adhesive so as to complete the DVD+RW disc.

The recording layer after being formed was in a rapidly cooled state, that is, an amorphous state. Accordingly, in order to crystallize the recording layer over the entire disc, an initialization was performed using a DVD+RW initializing apparatus. The initialization was performed by irradiating and scanning a high-power laser onto the entire surface of the disc. The wavelength of the laser for initialization was 810 nm, and the diameter of the laser beam was 1 µm in a scanning direction and 75 µm in a direction perpendicular to the scanning direction. The laser irradiation power (power consumption) was 1300 mW, and the scanning rate was 11 m/s.

The completed disc satisfied each standard provided for a DVD+RW disc in a non-recorded state (blank disc). Moreover, the recrystallization upper limit linear velocity was measured by irradiating a DC light irradiation with 11 mW using a pickup of a wavelength of 660 nm and an NA value of 0.65, and the measured value was 10.6 m/s.

Recording was performed on the thus-produced disc with a linear velocity of 14 m/s (4X; Tw=9.6 ns). The information recording and reproducing apparatus, DDU1000 manufactured by Pulstec Industries, was used for the recording information on the disc, and YOKOGAWA TA320 was used for measuring a jitter. Moreover, the multi signal generator manufactured by Pulstec Industries was used as a recording strategy generating apparatus.

Each parameter value of the recording strategy was set as follows: dTtop=-2 ns=-0.21Tw; Ttop=6 ns=0.63Tw; Tmp=5 ns=0.52Tw; and dTera=4.6 ns. The off-pulse period T1 was set as T1=Tw-(Tmp+dTera)=0 ns. At this time, the recording power Pw=18 mW, the erasing power Pe=5.6 mW, and the bias power Pb=0.1 mW.

Similarly, recording was performed with a linear velocity of 8.4 m/s (2.4X; Tw=15.5 ns) using the conventional recording strategy. Each parameter value of the record strategy was set as follows: dTtop=3.5 ns=0.23Tw; Ttop=10 ns=0.65Tw, Tmp=8 ns=0.52Tw; and dTera=2.5ns. The off-pulse period T1 was set as T1=Tw-(Tmp+dTera)=5.5 ns. At this time, the recording power Pw=16 mW, the erasing power Pe=8.5 mW, and the bias power Pb=0.1 mW.

Similarly, recording was performed with a linear velocity of 3.5 m/s (1.0X; Tw=38.0 ns). Each parameter value of the recording strategy was set as follows: dTtop=4.5 ns=0.12Tw; Ttop=10 ns=0.27Tw; Tmp=1.5 ns=0.33Tw; and dTera=0.0 ns. The off-pulse period T1 was set as T1=Tw-(Tmp+dTera)=25.5 ns. At this time, the recording power Pw=16 mW, the erasing power Pe=8.5 mW, and the bias power Pb=0.1 mW.

After recording, a jitter (σ/Tw(%)) was measured while reproducing information recorded on the disc at a reproducing speed of 1X (3.5 m/s), and the results shown in the following Tables 1-3 were obtained. As shown in Tables 1-3, the good results which satisfy 9% or less of jitter specified by DVD+RW standards were obtained within a range of 0 to 1000 times of a direct overwrite (DOW) at each recording speed.

**Table 1**

| (4X-recording) | |
|---|---|
| Number of times of DOW | σ/Tw(%) |
| 0 | 6.8 |
| 1 | 8.6 |
| 10 | 7.9 |
| 1000 | 8.4 |

**Table 2**

| (2.4X-recording) | |
|---|---|
| Number of times of DOW | σ/Tw(%) |
| 0 | 6.4 |
| 1 | 6.7 |
| 10 | 6.9 |
| 1000 | 8.4 |

**Table 3**

| (1X-recording) | |
|---|---|
| Number of times of DOW | σ/Tw(%) |
| 0 | 7.0 |
| 1 | 7.2 |
| 10 | 7.5 |
| 1000 | 7.5 |

### Example 2

A DVD+RW disc was produced in the same manner as the above-mentioned example 1, and the produced disc was initialized in the same manner as the example 1. Recording was performed on the initialized disc using the same recording and reproducing apparatus and the same recording strategy generating apparatus as that used in the example 1 at a linear velocity of 14 m/s (4X; Tw=9.6 ns). The parameter dTtop was set as dTtop=-3 ns=-0.31Tw, and other parameters of the recording strategy and the values Pw, Pe and Pb were set to the same values as that of the example 1.

After recording, a jitter (σ/Tw(%)) was measured while reproducing information recorded on the disc at a reproducing speed of 1X (3.5 m/s), and the results shown in the following Table 4 were obtained. As shown in Table 4, the good results which satisfy 9% or less of jitter specified by DVD+RW standards were obtained within a range of 0 to 1000 times of a direct overwrite (DOW), but the jitter values were larger than that of the example 1.

**Table 4**

| Number of times of DOW | σ/Tw(%) |
|---|---|
| 0 | 7.4 |
| 1 | 8.9 |
| 10 | 8.2 |
| 1000 | 8.6 |

### Example 3

A DVD+RW disc was produced in the same manner as the above-mentioned example 1, and the produced disc was initialized in the same manner as the example 1. Recording was performed on the initialized disc using the same recording and reproducing apparatus and the same recording strategy generating apparatus as that used in the example 1 at a linear velocity of 14 m/s (4X; Tw=9.6 ns). The parameter dTtop was set as dTtop=1 ns=0.1Tw, and other parameters of the recording strategy and the values Pw, Pe and Pb were set to the same values as that of the example 1.

After recording, a jitter (σ/Tw(%)) was measured while reproducing information recorded on the disc at a reproducing speed of 1X (3.5 m/s), and the results shown in the following Table 5 were obtained. As shown in Table 5, the good results which satisfy 9% or less of jitter specified by DVD+RW standards were obtained within a range of 0 to 1000 times of a direct overwrite (DOW), but the jitter values were larger than that of the example 1.

**Table 5**

| Number of times of DOW | σ/Tw(%) |
|---|---|
| 0 | 7.1 |
| 1 | 8.8 |
| 10 | 8.1 |
| 1000 | 8.6 |

### Example 4

A DVD+RW disc was produced with the same composition as the disc produced in the example 1 except for the recording layer is formed of a material of a recording medium recrodable at a recording speed of 1X to 4X instead of Ge₃In₃Sb₇₄Te₂₀. The thus-produced disc was initialized by the same method as that of the example 1. The recrystallization upper limit linear velocity was measured in the same manner as that of the example 1, and the measured value was 9.7 m/s.

Recording was performed on the thus-produced disc using the same recording and reproducing apparatus and the same recording strategy generating apparatus as that used in the example 1 at a linear velocity of 14 m/s (4X; Tw=9.6 ns), 8.4 m/s (2.4X; Tw=15.5 ns) and 3.5 m/s (1.0X; Tw=34.0 ns). The parameters of the recording strategy and the values Pw, Pe and Pb were set to the same values as that of the example 1.

After recording, a jitter (σ/Tw(%)) was measured while reproducing information recorded on the disc at a reproducing speed of 1X (3.5 m/s), and the results shown in the following Tables 6-8 were obtained. As shown in Tables 6-8, 9% or less of jitter specified by DVD+RW standards was satisfied within a range of 0 to 1000 times of a direct overwrite (DOW) at each recording speed, but the jitter values of the 4X recording speed were larger than that of the example 1 and the jitter valued of the 2.4X recording speed and the 1X recording speed were smaller than that of the example 1.

**Table 6**

| (4X-recording) | |
|---|---|
| Number of times of DOW | σ/Tw(%) |
| 0 | 7.1 |
| 1 | 8.8 |
| 10 | 8.2 |
| 1000 | 8.7 |

**Table 7**

| (2.4X-recording) | |
|---|---|
| Number of times of DOW | σ/Tw(%) |
| 0 | 6.1 |
| 1 | 6.5 |
| 10 | 6.7 |
| 1000 | 8.2 |

**Table 8**

| (1X-recording) | |
|---|---|
| Number of times of DOW | σ/Tw(%) |
| 0 | 6.8 |
| 1 | 7.1 |
| 10 | 7.2 |
| 1000 | 7.4 |

### Example 5

A DVD+RW disc was produced with the same composition as the disc produced in the example 1 except for the recording layer is formed of a material of a recording medium recordable at a recording speed of 1X to 4X instead of Ag₁In₃Sb₇₃Te₁₉Ge₄. The thus-produced disc was initialized by the same method as that of the example 1. The recrystallization upper limit linear velocity was measured in the same manner as that of the example 1, and the measured value was 11.5 m/s.

Recording was performed on the thus-produced disc using the same recording and reproducing apparatus and the same recording strategy generating apparatus as that used in the example 1 at a linear velocity of 14 m/s (4X; Tw=9.6 ns), 8.4 m/s (2.4X; Tw=15.5 ns) and 3.5 m/s (1.0X; Tw=34.0 ns). The parameters of the recording strategy and the values Pw, Pe and Pb were set to the same values as that of the example 1.

After recording, a jitter (σ/Tw(%)) was measured while reproducing information recorded on the disc at a reproducing speed of 1X (3.5 m/s), and the results shown in the following Tables 6-8 were obtained. As shown in Tables 9-11, 9% or less of jitter specified by DVD+RW standards was satisfied within a range of 0 to 1000 times of a direct overwrite (DOW) at each recording speed, but the jitter values of the 4X recording speed were smaller than that of the example 1 and the jitter values of the 2.4X recording speed and the 1X recording speed were larger than that of the example 1.

**Table 9**

| (4X-recording) | |
|---|---|
| Number of times of DOW | σ/Tw(%) |
| 0 | 6.4 |
| 1 | 8.2 |
| 10 | 7.6 |
| 1000 | 8.1 |

**Table 10**

| (2.4X-recording) | |
|---|---|
| Number of times of DOW | σ/Tw(%) |
| 0 | 6.9 |
| 1 | 7.1 |
| 10 | 7.4 |
| 1000 | 8.8 |

**Table 11**

| (1X-recording) | |
|---|---|
| Number of times of DOW | σ/Tw(%) |
| 0 | 7.5 |
| 1 | 7.8 |
| 10 | 8.0 |
| 1000 | 8.1 |

### Comparative Example 1

A DVD+RW disc was produced in the same manner as the above-mentioned example 1, and the produced disc was initialized in the same manner as the example 1.

Recording was performed on the thus-produced disc using the same recording and reproducing apparatus and the same recording strategy generating apparatus as that used in the example 1 at a linear velocity of 14 m/s (4X; Tw=9.6 ns).

Each parameter value of the recording strategy was set as follows: dTtop=-2 ns=-0.21Tw; Ttop=6 ns=0.63Tw; Tmp=5 ns=0.52Tw; and dTera=2.4 ns. The off-pulse period T1 was set as T1=Tw-(Tmp+dTera)=2.2 ns=0.23Tw. At this time, the recording power Pw=18 mW, the erasing power Pe=5.6 mW, and the bias power Pb=0.1 mW.

After recording, a jitter (σ/Tw(%)) was measured while reproducing information recorded on the disc at a reproducing speed of 1X (3.5 m/s), and the results shown in the following Table 12 were obtained. As shown in Table 12, the jitter values of DOW=0 and DOW =10 satisfy 9% or less of jitter specified by DVD+RW standards but the jitter values of DOW=1 and DOW=1000 were out of the specified range, which was not preferable results.

**Table 12**

| Number of times of DOW | σ/Tw(%) |
|---|---|
| 0 | 8.1 |
| 1 | 10.4 |
| 10 | 8.2 |
| 1000 | 9.5 |

### Comparative Example 2

A DVD+RW disc was produced in the same manner as the above-mentioned example 1, and the produced disc was initialized in the same manner as the example 1.

Recording was performed on the thus-produced disc using the same recording and reproducing apparatus and the same recording strategy generating apparatus as that used in the example 1 at a linear velocity of 14 m/s (4X; Tw=9.6 ns).

Each parameter value of the recording strategy was set as follows: dTtop=2 ns=0.21Tw; Ttop=6 ns=0.63Tw; Tmp=5 ns=0.52Tw; and dTera=4.6 ns. The off-pulse period T1 was set as T1=Tw-(Tmp+dTera)=0 ns. At this time, the recording power Pw=18 mW, the erasing power Pe=5.6 mW, and the bias power Pb=0.1 mW.

Different from the example 1 and the comparative example 1, the parameter dTtop was set on the plus side from a position 1 clock after the rising of the logical data pulse.

After recording, a jitter (σ/Tw(%)) was measured while reproducing information recorded on the disc at a reproducing speed of 1X (3.5 m/s), and the results shown in the following Table 13 were obtained. As shown in Table 13, the jitter value of DOW=0 satisfies 9% or less of jitter specified by DVD+RW standards but the jitter values of DOW=1, DOW=10 and DOW=1000 were out of the specified range, which was not preferable results.

**Table 13**

| Number of times of DOW | σ/Tw(%) |
|---|---|
| 0 | 7.9 |
| 1 | 12.8 |
| 10 | 9.6 |
| 1000 | 11.2 |

The present invention is not limited to the specifically disclosed embodiments, and variations and modifications may be made without departing from the scope of the present invention.

The present application is based on Japanese priority applications No. 2002-322926 and No. 2002-357790, the entire contents of which are hereby incorporated by reference.

## Claims

1. An information recording apparatus for recording information on a recording medium by irradiating a pulsed light onto the recording medium, comprising:
a rotating mechanism that rotates the recording medium at one of predetermined recording speeds;
an optical head irradiating the pulsed light onto the recording medium; and
a controller that controls the optical head so as to irradiate the pulsed light so that a length of a recording mark formed on the recording medium by irradiation of the pulsed light is an n times of a period Tw of a basic clock, where n is a natural number, the controller also controls the pulsed light in accordance with one of predetermined recording strategies which matches the one of the predetermined recording speeds so that the pulsed light contains a train of multi-pulses of a light having a recording power Pw and a light having a bias power Pb is irradiated during intervals between the adjacent multi-pulses and a light having an erasing power Pe is irradiated during intervals between adjacent trains of the multi-pulses, where a relationship Pw>Pe>Pb is satisfied,
wherein the controller adds an off-pulse to an end of a final pulse of the train of multi-pulses so that the light having the bias power Pb is irradiated during a period T1 of the off-pulse; and
the controller is capable of setting the period T1 of the off-pulse to a predetermined value so that a relationship 0≦T1<0.2Tw is satisfied.

2. The information recording apparatus as claimed in claim 1, wherein the controller sets the predetermined value of the period T1 of the off-pulse when recording is performed in accordance with one of the predetermined recording strategies, which is used for the recording speed equal to or higher than 11 m/s.

3. The information recording apparatus as claimed in claim 1, wherein the recording medium includes a recording layer formed of a material changeable into either an amorphous state and a crystal state, and the controller uses one of the predetermined recording strategies according to which the predetermined value of the period T1 of the off-pulse is set when a recrystallization upper limit linear velocity of the recording medium is 9 m/s to 13 m/s.

4. The information recording apparatus as claimed in claim 1, wherein the controller uses one of the predetermined recording strategies according to which, when a rising of a head pulse of the train of the multi-pulses leads a time when one period Tw has passed after a rising of a logical data pulse by a time interval dTtop, a relationship -3Tw<dTtop<0 is satisfied.

5. The information recording apparatus as claimed in claim 1, wherein the controller uses one of the predetermined recording strategies according to which the period T1 of the off-pulse is set as T1=0.

6. The information recording apparatus as claimed in claim 1, wherein the recording medium is a DVD+RW, and the predetermined recording strategies includes a strategy for a recording speed of 3.5 m/s, a strategy for a recording speed of 8.4 m/s and a strategy for a recording speed of 14 m/s, and wherein the predetermined value of the period T1 is set when the strategy for the recording speed of 14 m/s is used to generate the pulsed light when recording.

7. An information recording method for recording information on a recording medium by irradiating a pulsed light onto the recording medium so that a length of a recording mark formed on the recording medium by irradiation of the pulsed light is an n times of a period Tw of a basic clock, where n is a natural number, the recording medium including a recording layer formed of a material changeable into either an amorphous state and a crystal state, the recording medium having a recrystallization upper limit linear velocity of 9 m/s to 13 m/s, the method comprising the steps of:
irradiating the pulsed light containing a train of multi-pulses of a light having a recording power Pw and a light having a bias power Pb during intervals between the adjacent multi-pulses and a light having an erasing power Pe during intervals between adjacent trains of the multi-pulses, where a relationship Pw>Pe>Pb is satisfied; and
adding an off-pulse to an end of a final pulse of the train of the multi-pulses so that the light having the bias power Pb is irradiated during a period T1 of the off-pulse, the period T1 of the off-pulse being set to a predetermined value so that a relationship 0≦T1<0.2Tw is satisfied.

8. The information recording method as claimed in claim 7, wherein the predetermined value is set to the period T1 of the off-pulse when recording is performed at recording speed equal to or higher than 11 m/s.

9. The information recording method as claimed in claim 7, wherein, when a rising of a head pulse of the train of the multi-pulses leads a time when one period Tw has passed after a rising of a logical data pulse by a time interval dTtop, a relationship - 3Tw<dTtop<0 is satisfied.

10. The information recording method as claimed in claim 7, wherein the period T1 of the off-pulse is set as T1=0.
